# FASCICULE DE BREVET EUROPEEN

(11) **EP 2 489 572 B1**
(45) Date de publication et mention de la délivrance du brevet: **08.07.2015**
(21) Numéro de dépôt: 12155442.2
(22) Date de dépôt: 14.02.2012
(51) Int. Cl.: B62B 5/00, B62B 5/04

(54) **Chariot d'atelier à démarrage assisté manuellement**
Fahrzeug mit manueller Hilfsstartvorrichtung
Hand cart with manually assisted starting

(30) Priorité: 16.02.2011 FR 1151257
(43) Date de publication de la demande: 22.08.2012
(73) Titulaire: Coutier Industrie, 57970 Basse Ham (FR)
(72) Inventeur: Coutier, Charles, 57570 Cattenom (FR)
(74) Mandataire: Lavialle, Bruno François Stéphane

(56) Documents cités:
- WO-A1-95/34463
- CH-A- 112 016
- DE-U1- 29 918 650
- FR-A1- 2 919 253
- US-A- 3 917 171
- US-A1- 2004 066 016

## Description

La présente invention concerne les chariots de manutention que l'on emploie dans les ateliers de montage par exemple de l'industrie automobile pour notamment déstocker des composants d'un magasin, les apporter et les présenter au lieu de leur utilisation.

### ARRIERE PLAN DE L'INVENTION

Ces chariots sont associés en un train de chariots, traîné par un véhicule motorisé depuis le lieu de déstockage jusqu'à la ligne de montage. Ils demandent une manoeuvre manuelle pour former le train ou le dissocier. Cette manipulation est un facteur de pénibilité de la tâche de l'opérateur qu'il est nécessaire de réduire au maximum pour satisfaire aux dispositions de plus en plus exigeantes qui régissent les conditions de travail.

On sait que la pénibilité tient à l'effort que l'opérateur doit développer pour mettre en mouvement le chariot lorsqu'il est chargé. Il faut en effet vaincre l'inertie de la charge ainsi que la résistance qu'offre le sol au roulement du chariot (irrégularités du sol, particules, ...).

Il a déjà été proposé des dispositifs d'aide au démarrage de ce type de chariots pour remédier à cette demande de travail peu ergonomique.

Il s'agit tout d'abord des dispositifs de motorisation d'au moins un essieu du chariot. Ces dispositifs ont pour principal inconvénient de devoir faire appel à une source d'énergie embarquée, notamment une batterie d'accumulation d'énergie électrique. Cette batterie est associée à un moteur en prise avec l'essieu et des moyens de commande du moteur à la disposition de l'opérateur. On comprend qu'un chariot ainsi équipé est un matériel lourd qui, surtout, doit être inscrit dans une procédure de maintenance souvent rédhibitoire par rapport à la fonction du produit en termes d'investissements et de coûts de fonctionnement.

Il existe également des dispositifs d'assistance au démarrage qui comportent des composants permettant d'emmagasiner de l'énergie dérivée de celle dépensée par le véhicule moteur lors du déplacement du train de chariot. On citera à titre d'exemple le document FR 2 899 550.

Il existe enfin des dispositifs d'assistance au démarrage qui utilisent l'énergie musculaire développée par l'opérateur mais dans des conditions ergonomiques et économes. On citera à ce propos le document FR 2 613 996 qui décrit un couplage entre le timon de manoeuvre manuelle d'un transpalette et son essieu avant par lequel tout pivotement du timon se traduit par un entraînement en rotation de cet essieu (transmission par chaîne et roue dentée ou par un jeu de pignons coniques). Dans le document DE 1 254 496, l'axe de pivotement du timon de manoeuvre et l'axe de la roue sont confondus et le basculement du timon est transmis à la roue par un mécanisme à cliquet débrayable.

Il existe enfin une dernière sorte de mécanismes d'assistance au démarrage qui opère à la manière d'un levier du second genre. Ce levier, lié au bâti du chariot, prend appui par l'une de ses extrémités sur le sol de roulement du chariot. Cette extrémité devient alors un point fixe de pivotement inférieur, le levier étant manoeuvré manuellement autour de ce point de pivotement par son autre extrémité et dans le sens d'avancement à imprimer au chariot. Ainsi la zone de liaison du levier au chariot (donc le chariot) est déplacée sous un effort plus important mais sur une plus faible amplitude que le déplacement résultant de l'effort développé par l'opérateur manoeuvrant l'extrémité supérieure du levier. On citera, comme illustration de ce genre d'appareils, le document FR 2 919 253 qui décrit un chariot de manutention selon le préambule de la revendication 1.

L'invention concerne cette dernière catégorie de mécanismes d'assistance au démarrage avec des perfectionnements importants quant à sa structure pour, notamment, que la manoeuvre par l'opérateur soit encore plus simple, que le chariot puisse être du même point de manoeuvre, assisté au démarrage dans les deux sens possibles de son déplacement et que le chariot puisse être immobilisé par ce même mécanisme.

### OBJET DE L'INVENTION

C'est ainsi que l'invention a pour objet un chariot de manutention comportant une plateforme roulante, un levier de démarrage du chariot avec une poignée à une première partie d'extrémité, un organe de son appui sur le sol à une seconde partie d'extrémité, opposée à la première, et une partie intermédiaire située entre l'organe d'appui et la poignée et reliée à la plateforme de sorte que le levier peut pivoter autour de l'organe en appui sur le sol depuis une première position vers une deuxième position, la partie intermédiaire du levier exerçant pendant le pivotement un effort de poussée sur la plateforme qui provoque le déplacement de cette dernière dans un sens correspondant au sens de pivotement du levier, **caractérisé en ce que** la liaison du levier de démarrage à la plateforme comprend une articulation d'axe perpendiculaire à la direction du déplacement à imprimer au chariot et un guidage en coulissement d'au moins la partie d'extrémité du levier par rapport à la plateforme et le long de la dimension longitudinale du levier à l'encontre de l'effet d'un organe élastique de rappel tendant à repousser cette seconde partie d'extrémité vers le sol et en ce qu'au moins une portion terminale de la seconde partie d'extrémité est escamotable par pivotement autour d'un axe horizontal perpendiculaire à la direction de déplacement du chariot.

Par ces moyens, l'invention permet de lier de manière simple et permanente le levier à la plateforme (base) roulante, sans que cette liaison permanente constitue une gêne au roulement de la base alors que le levier est hors service.

Dans un mode de réalisation préféré de l'invention, il est prévu entre la plateforme et le levier un moyen de blocage de l'articulation dans une position du levier comprise entre les première et deuxième positions susdites. Dans cette position intermédiaire, qui est celle qui, de préférence, correspond à la position verticale de la deuxième partie d'extrémité du levier, ce dernier constitue un frein pour le chariot.

Diverses variantes de réalisation sont envisagées.

Dans l'une d'entre elles, l'organe d'appui sur le sol du levier est un patin anti glissement. Dans une autre, l'organe d'appui du levier sur le sol est une roue pourvue d'un moyen de blocage commandé de sa rotation.

De préférence, le levier est coudé de manière qu'un débattement moteur de la poignée depuis ou vers une position verticale de celle-ci entraîne un débattement de la deuxième partie du levier sensiblement équilibré autour d'une position intermédiaire verticale de cette dernière. En effet le débattement du levier qui est situé à une extrémité de la plateforme roulante, est limité à la position verticale vers le chariot pour ne pas interférer avec la charge sur la plateforme.

Enfin, pour répondre à un besoin de manoeuvrer le chariot tant en le poussant qu'en le tirant, la première partie et la deuxième partie du levier sont connectables entre elles de manière démontable en deux positions relatives différentes, l'une apte à la création d'une impulsion de démarrage de poussée du chariot et l'autre apte à la création d'une impulsion de démarrage de traction du chariot. Cette disposition permet d'éviter la mise en place de deux leviers, l'un à chaque extrémité de la base roulante.

D'autres caractéristiques et avantages de l'invention ressortiront de la description donnée ci-après d'un exemple de réalisation de l'invention.

### BREVE DESCRIPTION DES DESSINS

Il sera fait référence aux dessins annexés dans lesquels :
- la figure 1 représente par une vue de côté, un chariot conforme à l'invention,
- la figure 2 est une vue de détail d'un premier mode de réalisation du dispositif d'assistance au démarrage mis en oeuvre dans le chariot conforme à l'invention,
- la figure 3 est le schéma d'une variante de réalisation de ce dispositif dans son état d'aide au démarrage par poussée du chariot,
- la figure 4 est le schéma de cette variante dans son état d'aide au démarrage par traction du chariot,
- la figure 5 illustre un autre mode de réalisation de l'invention dans son état d'aide au démarrage.

### DESCRIPTION DETAILLEE DE L'INVENTION

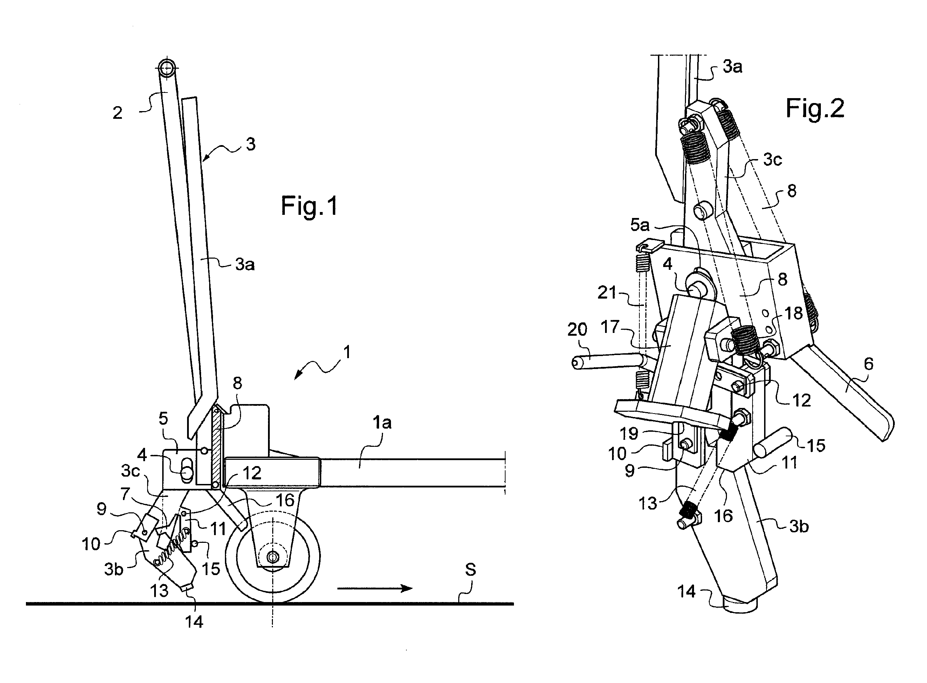

A la figure 1, on a représenté un chariot 1 dont la plateforme ou base roulante 1a possède à l'une de ses extrémités une poignée de manoeuvre 2.

Selon l'invention, le châssis de cette plateforme est équipé d'un levier 3 divisé en une première partie supérieure 3a, une deuxième partie inférieure 3b et une partie intermédiaire 3c par laquelle le levier est relié au châssis de la plateforme 1a. Cette liaison, qui sera détaillée ci- après, a pour principal degré de liberté une rotation du levier 3 autour d'un axe 4 porté par le châssis de la base roulante, perpendiculaire au plan de la figure et parallèle au sol S sur lequel roule le chariot.

Les parties 3a et 3c sont solidaires et forment un coude de sorte que, lorsque la partie 3a est sensiblement verticale c'est-à-dire dans le plan de la poignée 2, l'extrémité inférieure de la partie 3c est éloignée de l'extrémité de la base roulante.

De manière plus détaillée et en regard également de la figure 2, la base roulante est équipée d'une chape 5 qui présente des lumières 5a pour l'axe 4 qui est solidaire de la partie intermédiaire 3c. Cette chape 5 possède deux extensions inférieures en V 6 et 7 qui constituent des butées fixes qui coopèrent avec le levier lors de son pivotement autour de l'axe 4, comme décrit ci-après.

Des ressorts latéraux 8 sont attelés entre le levier 3 au niveau du coude entre ses parties 3a et 3c et la chape 5. Leur effet est un rappel de l'axe 4 en direction de l'extrémité inférieure des lumières 5a de la chape 5.

La partie inférieure 3b est articulée à l'extrémité inférieure de la partie intermédiaire 3c autour d'un axe 9 pour pivoter par rapport à cette dernière dans le plan de la figure, c'est-à-dire dans le plan de pivotement d levier autour de l'axe 4. Une butée 10 de la pièce 3c limite ce pivotement de la partie inférieure 3b de sorte que cette partie soit, en butée, sensiblement dans l'alignement de la partie intermédiaire 3c (voir figure 2). Un cliquet 11 est articulé sur la partie 3c autour d'un axe 12. Son extrémité libre est sollicitée par un ressort 13 pour être en permanence au contact de la partie 3b du levier. Ce ressort tend à refermer la partie 3b en l'éloignant de la butée 10 autour de l'axe 9. Un patin anti glissement 14 équipe l'extrémité libre de la partie inférieure 3b du levier, extrémité qui prend appui sur le sol 5 lorsque le levier est manoeuvré par un opérateur. On notera la présence d'un doigt transversal 15 porté par le cliquet 11 est apte à entrer en contact avec l'une et l'autre des butées 6 et 7.

En partant de l'état représenté à la figure 1, l'opérateur qui souhaite mettre en mouvement le chariot dans le sens A en le poussant, empoigne le levier 3 par sa partie supérieure et l'attire vers lui. Le basculement du levier conduit le doigt 15 du loquet 11 au contact de la butée 6. Le loquet bloqué repousse en pivotement horaire la partie 3b du levier qui parvient en butée contre l'arrêt 10 de la partie 3c. Dans le même temps, le loquet 11 tombe dans une encoche 16 de la partie 3b du levier pour le bloquer en extension (dans l'alignement de la partie 3c). L'opérateur, à ce stade, repousse le levier. Ce dernier pivote autour de l'axe 4 et le patin 14 prend appui sur le sol S. Le levier pivote alors autour de ce point d'appui et agit sur le châssis de la base roulante comme un lever du deuxième genre, appliquant à cette base une force de poussée horizontale, par l'intermédiaire de l'axe 4 et de la chape 5, qui est un multiple de la force de poussée développée par l'opérateur sur le levier 3. Pendant ce pivotement, les ressorts 8 appliquent le patin sur le sol S et l'axe 4 circule dans les lumières 5a de la chape 5 , d'abord vers le haut puis après la position verticale du levier, vers le bas. Au moment où le levier 3 parvient au voisinage du plan de la poignée 2, le doigt 15 du loquet 11 est entravé par la butée 7 et quitte l'encoche 16. Le ressort 13 replie la partie 3b du levier sous la partie 3c si bien que le patin 14 quitte le sol. La distance qui l'en sépare est suffisante pour qu'en pivotant dans le fond des lumières 5a, le levier ne frotte plus sur le sol pour être réarmé. De même, dans sa position hors service, il ne frotte pas le sol.

On comprend qu'ainsi une impulsion de poussée du chariot est donnée sans effort, ce qui est confortable pour l'opérateur. Le coude du levier permet, lors de son service, d'équilibrer l'amplitude du pivotement de la partie inférieure 3b de part et d'autre d'une position médiane verticale de celle-ci.

On notera à la figure 2 la présence d'un organe 17, articulé en 18 sur l'un des flancs de la chape 5. Cet organe 17 peut être rabattu en direction de la partie intermédiaire de la partie 3c intermédiaire du levier sous la chape, quand cette partie est verticale. La forme de cet organe est celle d'une gouttière 19 ouverte du côté de la chape 5 et la partie 3c comporte un relief qui peut être chevauché par cette gouttière dans la position verticale susdite. Un levier 20 permet de rabattre ou de soulever l'organe 17 autour de l'axe 18 et un ressort 21 aide au relevage de l'organe en même temps qu'organe de maintien de cet organe dans ses deux états en et hors service. Quand la gouttière 19 chevauche le relief, le levier est immobilisé en rotation autour de l'axe 4 et, s'il est armé, constitue une béquille de freinage du chariot par appui du patin 14 sur le sol S.

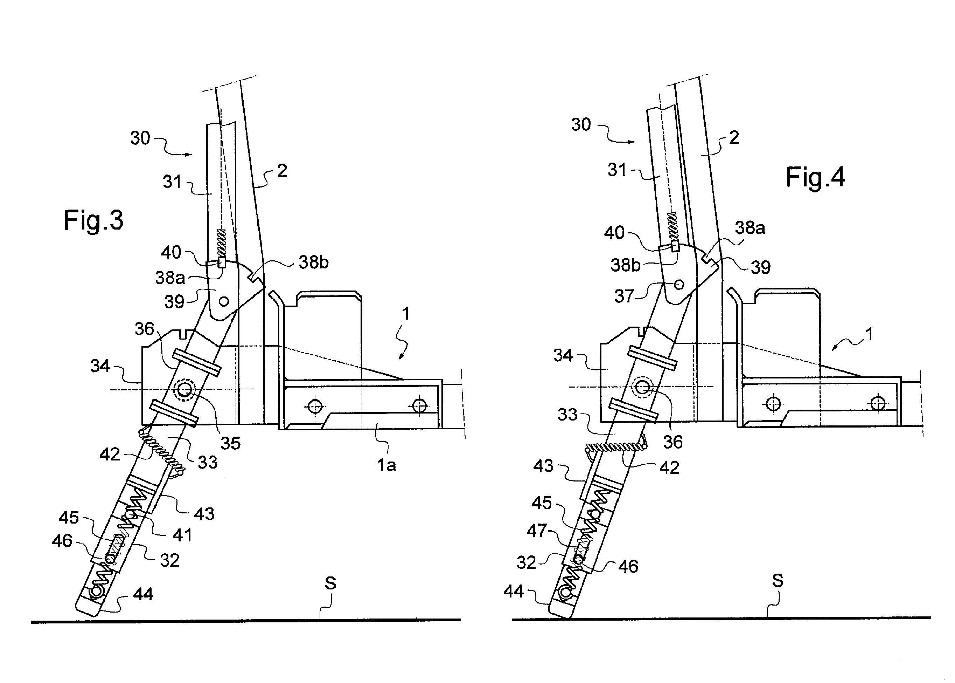

Dans la variante représentée schématiquement aux figures 3 et 4, le levier 30 comporte également trois parties, supérieure 31, inférieure 32 et intermédiaire 33. Une chape 34 porte un axe 35 de pivotement d'un manchon 36 dans lequel est montée à rotation la partie 33 du levier, autour de son axe longitudinal.

La partie supérieure 31 du levier est articulée à la partie intermédiaire 33 autour d'un axe 37 et les deux parties sont mutuellement indexables l'une par rapport l'autre au moyen d'encoches 38a,b, prévues sur un secteur 39 solidaire de la partie 33, dans lesquelles un indexeur 40, solidaire de la partie 31 du levier, peut être logé ou desquelles il peut être extrait par tout moyen approprié, manoeuvré par l'opérateur.

La partie inférieure 32 est quant à elle, articulée sur la partie intermédiaire 33 autour d'un axe 41. Cette partie inférieure est soumise à l'effort d'un ressort de rappel 42 qui tend à la maintenir dans l'alignement de la partie intermédiaire 33. Une butée 43, solidaire de la partie 32, constitue l'arrêt en pivotement de cette partie sous l'effet du ressort.

La partie inférieure 32 est également pourvue à son extrémité libre d'un patin anti glissement 44 sur le sol S. En outre, la partie 32 est télescopique de sorte que par l'effet d'un ressort 45, d'un doigt 46 et d'une lumière de guidage 47 le levier 30 peut se raccourcir en service (comme le levier des figures précédentes était déplacé vers le haut lors de son pivotement par rapport au sol).

Dans son état de la figure 3, le levier est 30 est en fin de course de poussée, ayant atteint sensiblement le plan de la poignée 2. Pour cette opération, l'indexeur 40 est logé dans l'encoche 38a du secteur 39, imposant un coude au levier grâce auquel le pivotement de la partie supérieure est d'un côté d'un plan vertical d'extrémité de la base roulante alors que le pivotement de la partie inférieure du levier est équilibré de chaque côté de ce plan vertical. Pour imprimer une nouvelle impulsion de poussée sur le chariot, l'opérateur tire à lui (vers la gauche sur la figure) le levier 30. Le patin glisse sur le sol alors que la partie 32 pivote autour de l'axe 41 pour ensuite, à la fin de ce mouvement, échapper au sol et être rappelée en alignement avec la partie 33. Le levier est alors armé et peut être remonté autour de l'axe 37 vers la poignée 2. Dans ce mouvement, le patin 44 prend appui sur le sol et forme le point de pivotement du levier comme dans le cas précédent. L'alignement des parties 32 et 33 est conservé car les efforts sur celles-ci sont dans le sens d'un couple contré par la butée 43.

L'avantage de cette variante de réalisation réside dans la possibilité de produire une démultiplication de l'effort de démarrage en tirant sur le chariot. Ainsi, à partir de l'état du dispositif représenté à la figure 3, l'opérateur désengage l'indexeur 40 et fait tourner la partie 33 autour de son axe longitudinal de manière à provoquer une rotation de la partie 33 dans le manchon 36 de 180 degrés. L'indexeur 40 se trouve alors en face de l'encoche 38b comme représenté à la figure 4, ce qui permet un indexage en ayant inversé le coude entre les parties 31 et 33 du levier, pour placer sensiblement verticalement la partie 31 du levier au début de l'opération. On comprend, au vu de la figure 4, que quand l'opérateur tire vers lui le levier, la partie inférieure de ce dernier ne peut pas s'escamoter du fait de la position de la butée 43 qui maintien l'alignement des parties 32 et 33 malgré les efforts encaissés par le levier.

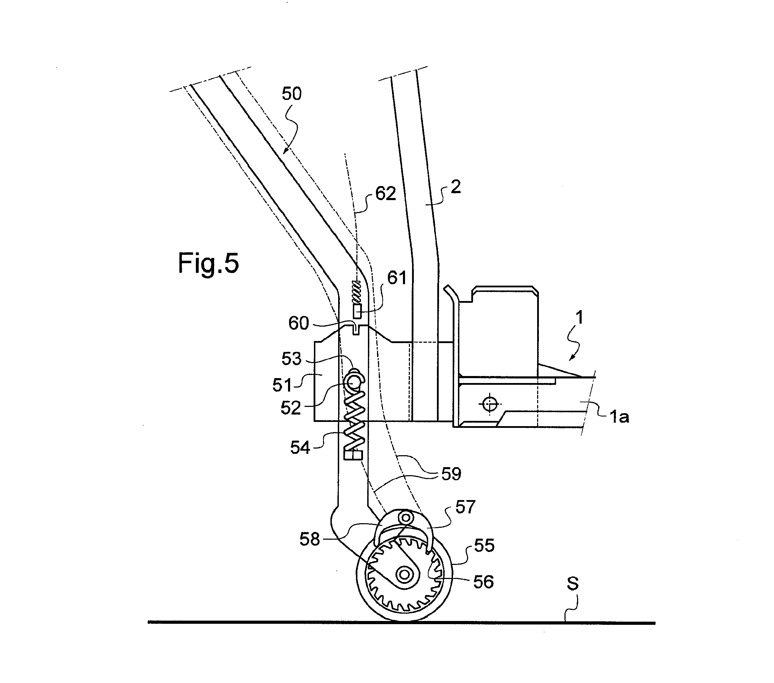

La figure 5 est le schéma d'une variante de réalisation qui est également réversible mais dans laquelle, toutes choses égales par ailleurs, l'amplitude de l'impulsion est plus réduite. Le levier 50 est également coudé et articulé dans une chape 51 comme dans le cas des figures 1 et 2. L'axe d'articulation 52 est fixe par rapport à la chape et traverse le levier dans une lumière 53. Un ressort 54 tend à maintenir l'axe 52 à l'extrémité supérieure de la lumière 53, donc à repousser le levier vers le sol S.

A son extrémité inférieure, le levier porte une roue 55, du type roue à rochet dont la denture 56 coopère avec l'un 57 ou l'autre 58 cliquet pour bloquer, au gré de l'opérateur, dans l'un ou l'autre sens, la rotation de la roue 55. Des systèmes gaines et câbles 59 permettent cette commande. Ils permettent également de mettre en prise les deux cliquets avec la denture 56 et ainsi totalement bloquer la roue ou, au contraire, de libérer la rotation de la roue en dégageant les deux cliquets.

On constate sur cette figure, qu'à partir d'une position médiane du levier telle que représentée, on peut donner à la plateforme 1 une impulsion en poussée ou en traction selon qu'on a bloqué la roue dans un sens ou un autre.

On remarque la présence sur la chape 51 d'une encoche 60 qui peut recevoir un indexeur 61 porté par le levier et commandé par l'opérateur au moyen d'un système gaine câble 62. Le levier est alors bloqué en position médiane. Si la roue est totalement bloquée, le dispositif fait office de frein pour le chariot. En position de repos, la partie supérieure du levier est sensiblement verticale et la roue est libre de rouler sur le sol. On peut envisager que la roue, dans cette position soit décollée du sol, mais ce serait au détriment de l'amplitude utile de pivotement du levier.

## Revendications

1. Chariot (1) de manutention comportant une plateforme roulante (1a), un levier (3) de démarrage du chariot avec une poignée à une première partie (3a) d'extrémité, un organe (14) de son appui sur le sol (S) à une seconde partie d'extrémité (3b), opposée à la première, et une partie intermédiaire (3c) située entre l'organe d'appui (14) et la poignée (3a) et reliée à la plateforme (1a) de sorte que le levier (3) peut pivoter autour de l'organe (14) en appui sur le sol (S) depuis une première position vers une deuxième position, la partie intermédiaire (3c) du levier exerçant pendant le pivotement un effort de poussée sur la plateforme (1a) qui provoque le déplacement de cette dernière dans un sens correspondant au sens de pivotement du levier (3), la liaison du levier (3) de démarrage à la plateforme (1a) comprenant une articulation d'axe (4) perpendiculaire à la direction (A) du déplacement à imprimer au chariot (1), le chariot de manutention étant caractérisé en que la liaison du levier de démarrage à la plateforme comprend en outre un guidage en coulissement d'au moins la seconde partie d'extrémité (3b) du levier par rapport à la plateforme (1a) le long de la dimension longitudinale du levier à l'encontre de l'effet d'un organe élastique de rappel (8) tendant à repousser cette seconde partie d'extrémité vers le sol (S) et en ce qu'au moins une portion terminale (3b) de la seconde partie d'extrémité est escamotable par pivotement autour d'un autre axe horizontal (9) perpendiculaire à la direction de déplacement du chariot.

2. Chariot selon la revendication 1, **caractérisé en ce qu'**il est prévu entre la plateforme (1a) et le levier (3) un moyen de blocage (17) de l'articulation (4) dans une position du levier (3) comprise entre les première et deuxième positions susdites.

3. Chariot selon l'une des revendications précédentes, **caractérisé en ce que** l'organe d'appui sur le sol du levier est un patin (14) anti glissement.

4. Chariot selon l'unes des revendications 1 et 2, **caractérisé en ce que** l'organe d'appui du levier sur le sol est une roue (55) pourvue de moyens (57,58) de blocage commandés de sa rotation.

5. Chariot selon l'une des revendications précédentes, **caractérisé en ce que** le levier (3) est coudé de manière qu'un débattement moteur de la poignée depuis ou vers une position verticale de celle-ci entraîne un débattement de la deuxième partie (3b) du levier sensiblement équilibré autour d'une position intermédiaire verticale de cette dernière.

6. Chariot selon la revendication 5, **caractérisé en ce que** la première partie (3a) et la deuxième partie (3b) du levier sont connectables entre elles de manière réglable en deux positions relatives différentes, l'une apte à la création d'une impulsion de démarrage de poussée du chariot et l'autre apte à la création d'une impulsion de démarrage de traction du chariot.

## Patentansprüche

1. Förderwagen (1), umfassend eine Rollplattform (1a), einen Starthebel (3) zum Starten des Wagens mit einem Griff an einem ersten Endabschnitt (3a), einem Element (14) für seine Auflage auf dem Boden (S) an einem zweiten Endabschnitt (3b), der dem ersten entgegengesetzt ist, und einem Zwischenabschnitt (3c), der sich zwischen dem Auflageelement (14) und dem Griff (3a) befindet und mit der Plattform (1a) derart verbunden ist, dass sich der Hebel (3) um das Auflageelement (14) zur Auflage auf dem Boden (S) von einer ersten Position in eine zweite Position verschwenken kann, wobei der Zwischenabschnitt (3c) des Hebels während des Verschwenkens eine Schubkraft auf die Plattform (1a) ausübt, die das Verschieben dieser letztgenannten in eine Richtung bewirkt, die der Schwenkrichtung des Hebels (3) entspricht, wobei die Verbindung des Starthebels (3) mit der Plattform (1a) eine Gelenkverbindung mit einer Achse (4) umfasst, die senkrecht zur Richtung (A) der auf den Wagen (1) zu übertragenden Verschiebung ist, wobei der Förderwagen **dadurch gekennzeichnet ist, dass** die Verbindung des Starthebels mit der Plattform ferner eine Gleitführung zum Führen mindestens des zweiten Endabschnitts (3b) des Hebels relativ zur Plattform (1a) entlang der Längsabmessung des Hebels entgegen der Wirkung eines elastischen Rückstellelements (8) umfasst, das dazu neigt, diesen zweiten Endabschnitt in Richtung des Bodens (S) zurückzudrücken, und dass mindestens ein Endstück (3b) des zweiten Endabschnittes durch Verschwenken um eine weitere horizontale Achse (9), die senkrecht zur Verschiebungsrichtung des Wagens ist, einziehbar ist.

2. Wagen nach Anspruch 1, **dadurch gekennzeichnet, dass** zwischen der Plattform (1a) und dem Hebel (3) Sperrmittel (17) zum Blockieren der Gelenkverbindung (4) in einer Position des Hebels (3) vorgesehen sind, die zwischen der oben genannten ersten und zweiten Position liegt.

3. Wagen nach einem der vorhergehenden Ansprüche, **dadurch gekennzeichnet, dass** das Auflageelement des Hebels auf dem Boden ein Antigleit-Schuh (14) ist.

4. Wagen nach einem der Ansprüche 1 und 2, **dadurch gekennzeichnet, dass** das Auflageelement des Hebels auf dem Boden ein Rad (55) ist, das mit gesteuerten Mitteln (57, 58) zum Blockieren seiner Drehung versehen ist.

5. Wagen nach einem der vorhergehenden Ansprüche, **dadurch gekennzeichnet, dass** der Hebel (3) derart gebogen ist, dass eine antreibende Auslenkung des Griffes aus bzw. in Richtung dessen vertikaler Position eine Auslenkung des zweiten Abschnitts (3b) des Hebels bewirkt, die um eine vertikale Zwischenposition dieses zweiten Abschnittes im Wesentlichen ausgeglichen ist.

6. Wagen nach Anspruch 5, **dadurch gekennzeichnet, dass** der erste Abschnitt (3a) und der zweite Abschnitt (3b) des Hebels derart miteinander verbindbar sind, dass sie in zwei unterschiedlichen relativen Positionen einstellbar sind, wobei eine zur Erzeugung eines Startimpulses zum Schieben des Wagens und die andere zur Erzeugung eines Startimpulses zum Ziehen des Wagens geeignet ist.

## Claims

1. A trolley (1) including a rolling platform (1a), a lever (3) for starting the trolley having a handle in a first end portion (3a), a member (14) for supporting it on the ground (S) in a second end portion (3b), opposite the first, and an intermediate portion (3c) between the support member (14) and the handle (3a) and connected to the platform (1a) so that the lever (3) can pivot about the member (14) bearing on the ground (S) from a first position to a second position, the intermediate lever portion (3c) exerting a thrust force on the platform (1a) during pivoting that causes movement of the latter in a direction corresponding to the direction of pivoting of the lever (3), the connection of the lever (3) for starting the platform (1a) including an articulation with its axis (4) perpendicular to the direction (A) of movement to be imparted to the trolley (1), the trolley being **characterized in that** the connection of the starting lever to the platform further includes a sliding guide for at least the second end portion (3b) of the lever relative to the platform (1a) along the longitudinal dimension of the lever against the action of an elastic return member (8) tending to push this second end portion toward the ground (S) and **in that** at least one end portion (3b) of the second end portion is retractable by pivoting about another horizontal axis (9) perpendicular to the direction of movement of the trolley.

2. A trolley according to claim 1, **characterized in that** it includes between the platform (1a) and the lever (3) means (17) for locking the articulation (4) in a position of lever (3) between the aforesaid first and second positions.

3. A trolley according to either one of the preceding claims, **characterized in that** the member for supporting the lever on the ground is an anti-slip pad (14).

4. A trolley according to either one of claims 1 and 2, **characterized in that** the member for supporting the lever on the ground is a wheel (55) provided with means (57, 58) for selectively locking its rotation.

5. A trolley according to any one of the preceding claims, **characterized in that** the lever (3) is bent so that a driving movement of the handle to or from a vertical position thereof causes movement of the second lever portion (3b) substantially balanced around a vertical intermediate position of the latter.

6. A trolley according to claim 5, **characterized in that** the first portion (3a) and the second portion (3b) of the lever are connectable to each other in an adjustable manner in two different relative positions, one adapted to create a pulse to start pushing the trolley and the other adapted to create a pulse to start pulling the trolley.
